# EUROPEAN PATENT SPECIFICATION

(11) **EP 3 186 974 B1**
(45) Date of publication and mention of the grant of the patent: **15.04.2020**
(21) Application number: 15835659.2
(22) Date of filing: 28.08.2015
(51) Int. Cl.: H04R 1/00, H04M 1/60, H04R 27/00

(54) **WIRELESS SPEAKER SYSTEM**
KABELLOSES LAUTSPRECHERSYSTEM
SYSTÈME DE HAUT-PARLEUR SANS FIL

(30) Priority: 29.08.2014 US 201462043784 P
(43) Date of publication of application: 05.07.2017
(73) Proprietor: Harman International Industries, Inc., Stamford, CT 06901 (US)
(72) Inventor: PYE, Daniel Timothy, Jr., San Francisco, California 94109 (US); PUTTA, Satish, Northridge, California 91329 (US); METCALFE, Richard, Biggleswade Bedfordshire SG18 8BL (GB); YANG, Ling, Guangdong 518000 (CN)
(74) Representative: Bertsch, Florian Oliver
(86) International application number: PCT/US2015/047327
(87) International publication number: WO 2016/033400

(56) References cited:
- WO-A1-2009/134940
- JP-A- 2008 159 193
- KR-A- 20050 014 575
- US-A1- 2006 083 396
- US-A1- 2007 149 245
- US-A1- 2013 031 177
- US-A1- 2013 169 737
- US-A1- 2014 104 033
- Jens Christoffersen: "Switch Bounce and How to Deal with It", , 3 September 2015 (2015-09-03), page 1, XP055454826, Retrieved from the Internet: URL:https://www.allaboutcircuits.com/techn ical-articles/switch-bounce-how-to-deal-wi th-it/ [retrieved on 2018-02-27]

## Description

### CROSS-REFERENCE TO RELATED APPLICATIONS

This application claims the benefit of U.S. provisional application Serial No. 62/043,784 filed August 29, 2014.

### TECHNICAL FIELD

Embodiments disclosed herein generally relate to a wireless speaker system.

### BACKGROUND

Loudspeakers and A/V electronics are used to emit sound and present video. Often times, various speakers and electronics are included in a house or building and may be used to play media either concurrently or independently. The speakers and electronics often include wireless communication capabilities. For example, each device may communicate with a separate device to receive media input signals. However, existing systems may lack the ability to output high quality audio and video. Further, a user-friendly system for managing the media at each device may also be desired.

JP 2008 159193 A discloses a playback device according to the preamble of claim 1.

### SUMMARY

An audio playback device is provided as claimed in claim 1. It includes a speaker configured to play media content, at least one interface including a switch, a transceiver configured to transmit the media content to a second audio playback device and receive the media content from the second audio playback device; and a controller configured to receive a signal indicative of a user input that is received at the switch for a time duration and to one of transmit the media content to the second audio playback device via the transceiver for playback of the media content at the second audio playback device and to receive the media content from the second audio playback device via the transceiver based on the time duration.

A media content playback system is provided as claimed in claim 6 and includes a first playback device and a second playback device as defined above, each playback device having at least one pushbutton and each configured to transmit or receive media content via a wireless transceiver, wherein upon depression of the pushbutton at the first playback device, media content is transmitted therefrom to the second playback device.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
Figure 1A illustrates a front view of a speaker of a speaker system in accordance to one embodiment;
Figure 1B illustrates a perspective view of the speaker of Figure 1;
Figure 2 illustrates a block diagram of the speaker in accordance to one embodiment;
Figures 3A and 3B illustrate speaker systems in accordance to one embodiment;
Figure 4 illustrates a flow diagram of the speakers of the speaker system in accordance to one embodiment;
Figures 5A and 5B illustrate another flow diagram of the speaker system including a database in accordance with one embodiment;
Figures 6A-6J illustrate screen shots for a companion application of the speaker system in accordance with one embodiment;
Figures 7A-7D illustrate various diagrams for a multi-channel configuration of the speaker system in accordance with one embodiment;
Figures 8A-8B illustrate example library interfaces for the companion application;
Figures 9A and 9B illustrate example player interfaces for the companion application;
Figure 10 illustrates an example room overview interface for the companion application;
Figures 11A and 11B illustrate example party mode interfaces for the companion application;
Figures 12A and 12B illustrate overlays on the example player interfaces for the companion application; and
Figures 13A and 13B illustrates an example playlist interface for the companion application.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Disclosed herein is a wireless audio and/or video (AV) system including a plurality of speakers or devices. The devices may be arranged within a specific room of a house or building. The devices may communicate wirelessly with each other. Each device may act as a source device and be configured to rebroadcast media content to other devices within the network. Each device may also act as a sink device and receive media content from the other speakers. The devices may each include an interface including a plurality of pushbuttons for receiving instructions from a user regarding the rebroadcasting of audio content.

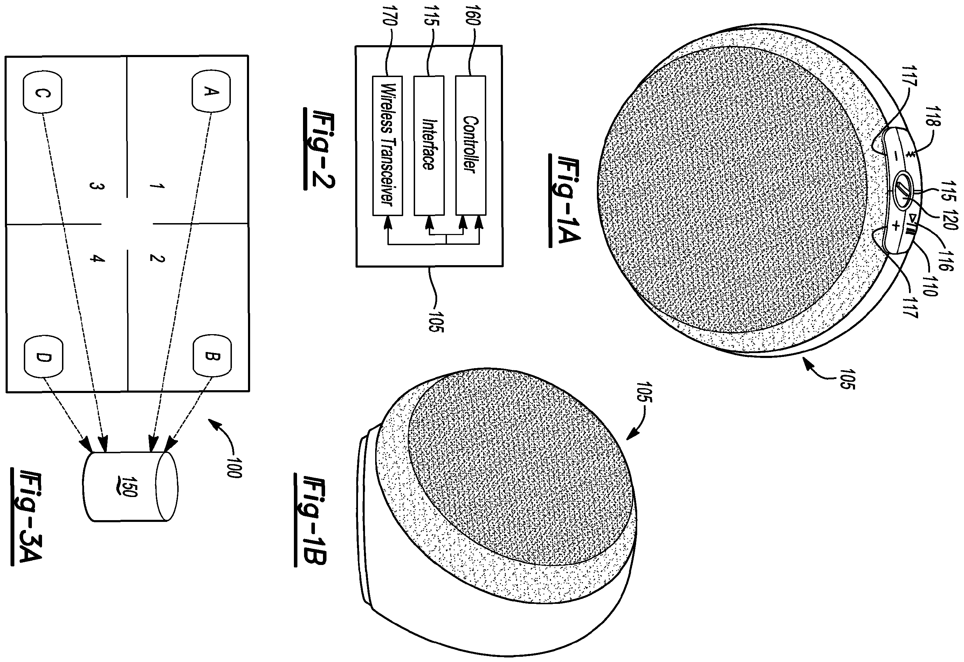

Figure 1A illustrates a front view of a speaker 105 of a speaker system in accordance to one embodiment. The speaker 105 may include an interface 110 which may include various depressible buttons or switches. The buttons may be used by a user to control the output of the speaker 105, or other speakers 105, as described in more detail herein. The interface 110 may include a link button 115 configured to initiate one or both of transmission and/or reception of audio content between speakers 105 within the speaker system. For example, depressing the link button 115, when activated, may instruct the speaker 105 to act as a source speaker and transmit the audio content currently being played therefrom to another speaker. Likewise, the link button 115 may be used to control the speaker 105 to be a sink speaker (*e.g*., or operate in a sink mode) and receive audio content from another speaker. The interaction by the user may determine which mode the speaker 105 intends to operate in. For example, a short press of the link button 115 may indicate that the speaker 105 is to receive audio content from another speaker within the network (*e.g*., operate in the sink mode) while a long press of the link button 115 may indicate that audio is to be re-broadcast from the speaker 105 to other speakers within the network (e.g., operate in a source mode). These examples are described in more detail below. Audio content may be wirelessly transmitted between the speakers 105 using any suitable wireless based media streaming protocol with tight node to node synchronization.

The interface 110 may also have other depressible buttons including, but not limited to, a play/pause button 116, volume buttons 117, and a BLUETOOTH® button 118. The interface may also include an indicator 120 such as a light emitting diode (LED) that is capable of showing any number of colors such as white, blue and amber, etc. The LEDs may be arranged under the buttons of the interface 110 to backlight the interface 110 and may be illuminated using light pipes. The indicator may be used to convey a speaker status to the user. For example, a constant white LED may indicate that audio is currently playing. In another example, a blue LED may indicate that a BLUETOOTH® device is connected with the speaker 105 and the BLUETOOTH® device is streaming or is ready to stream audio over BLUETOOTH® to the speaker 105. Other examples are shown below in Table 1.

**Table 1**

| LED | State | Indication |
|---|---|---|
| Stream LED | White, Constant | Audio stream playing. |
| | White, Flash Once | When enter into sink source or When switch active streaming session |
| | White, Quick Flash (for 3 second) | When enter into Party Mode from current streaming |
| | White, Flash | Factory settings restored |
| | Blue, Constant | BLUETOOTH® is playing |
| | Blue, Flash Once | When enter into Bluetooth source |
| | Blue, Quick Flash (for 3 second) | When enter into Party Mode from current BLUETOOTH® streaming |
| | Green, Constant | AUX input and AUX audio is detected (playing) |
| | Green, Flash Once | When enter into AUX source |
| | Green, Quick Flash (for 3 second) | When enter into Party Mode from current AUX streaming |
| | White, Double Quick Flash | WPS (Wi-Fi Protected Setup) Pin mode |
| | Off | When no streaming at any source |
| Wi-Fi LED | White, Constant | Wi-Fi connected |
| | White, Quick Flash | Wi-Fi connecting |
| | White, Slow Flash | Software AP Connect mode |
| | Amber, Constant | Sleep mode |
| | BLUE, Constant | Current is BT source and one Phone connected with device |
| | BLUETOOTH®, Quick Flash | Bluetooth in pairing mode or re-connecting |
| | BLUETOOTH®, Slow Flash | Current is BT source, but no phone connected and not in pairing mode or auto re-connect mode |
| | White, Double Quick Flash | WPS PBC mode |
| All LEDs | White, Flash Once | Power On or Going to sleep |
| | White, Quick Flash | Firmware upgrading |
| | White, Regular Flash for 3 second | Firmware upgrade success |
| | Amber (Wi-Fi LED) + White (Stream LED) Regular Flash for 3 second | Upgrade Failed |

Further, while the examples described herein relate to speakers, it should be understood that media content, including audio and visual content, may be rebroadcast among various devices to be played on those devices. Such devices, in lieu or in addition to the speakers, may be video capable devices.

Figure 1B illustrates a perspective view of the speaker 105 of Figure 1. Although not shown in Figures 1A and 1B, the speaker 105 may include any number of wireless antennas or transceivers configured to receive and transmit wireless signals. The speaker 105 may also include a power supply (not shown), either an external power supply (e.g., AC power source) or internal supply (e.g., battery), as well as other inputs (not shown) such as an auxiliary port, universal serial port (USB) port, etc. The speaker may include a controller 160 (as shown and described with respect to Figure 2), a memory and processor configured to carry out instructions, as described herein. The controller 160 may be configured to interpret and respond to wirelessly transmitted messages and commands and may facilitate rebroadcasting of audio as transmitted from/sent to other speakers.

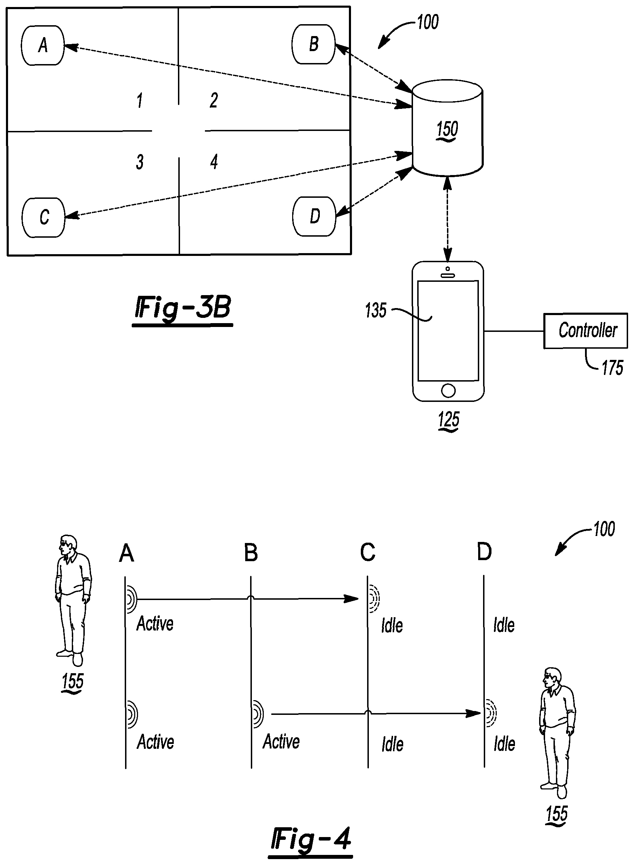

Figure 2 illustrates a block diagram of the speaker 105 including the controller 160 configured to facilitate playback at the speaker 105 as well as transmission of media content therefrom. The controller 160 may be in communication with a database 150 (as shown and described below with respect to Figure 3A) as well as the interface 110 and a wireless transceiver 170. The wireless transceiver 170 may be capable of receiving/transmitting signals, data and content from remote devices such as other speakers 105 and a mobile device 125 (as shown and described below with respect to Figure 3B).

Figure 3A illustrates the speaker system 100 in accordance to one embodiment. The speaker system 100 may include at least one speaker 105. In the example of Figure 3, four speakers are shown and labeled as speaker A, speaker B, speaker C and speaker D, respectively, and referred to herein as "speakers 105," collectively. While four speakers 105 are shown in the figures, it is recognized that any number of speakers 105 may be included in the system 100. Each speaker 105 or multiple speakers 105 (for multiple speakers 105 within a zone, they may be configured into a stereo pair, multi-channel speaker system, or as synchronized mono or stereo stand-alone devices) may be located within a zone of a building, home, establishment, dwelling, etc. For example, each zone may be a room within a house or office. Each speaker 105 may be capable of connecting to a wireless network within the building. At least one of the speakers 105 within the network may connect to an audio source. The audio source may be any device that transmits audio from a location away from the speaker 105. In one example, the audio source may be supplied by a mobile device 125 such as a phone, tablet or personal computer (PC). In another example, the audio source may be an audio device such as a compact disc player, an AM/FM radio, etc. The audio source may transmit audio to the speaker 105 via an auxiliary input, or via a wireless network. The audio source may retrieve audio content from a library within a mobile device 125, such as for example, from a cloud storage database, or from a subscription service such as Pandora or Spotify, etc. Each of the speakers 105 may be connected with a separate audio source. For example, speaker A may receive audio over Wi-Fi™ from a mobile device 125 such as a phone, while speaker D is concurrently receiving audio content via an auxiliary input.

Each speaker 105 may be in communication with a database 150. The database 150 may be a data repository configured to maintain information and data for each of the speakers 105. Although not shown, the database 150 may be controlled by a controller programmed to interpret and update the database 150. The controller may be part of the database 150, in communication with the database, or part of another device, such as a mobile device 125 (e.g., phone, tablet or PC). The database 150 may maintain various tables, including a look-up table for the status of each speaker 105 within the wireless network. For example, one or more of the tables may indicate the status of a specific speaker 105, including whether the speaker is active or idle. An active speaker 105 is generally defined as a speaker that is playing audio.

The speakers 105 may communicate with the database 150 via a wireless network such as Wi-Fi™, BLUETOOTH®, cellular networks, etc. The speakers 105 may also communicate with each other via the same wireless communication, or a separate wireless network. For example, the speaker 105 may transmit/receive audio data from another speaker 105 within the wireless network. In one example, speaker A may be configured to transmit audio to speaker B in response to the link button 115 being depressed.

Figure 3B illustrates the speaker system 100 of Figure 3A, including the mobile device 125. The mobile device 125 may include a device display 135 configured to display the screen shots and interfaces described herein. The display 135 may include a touch-screen, keyboard, or other type of device capable of receiving user input. The mobile device 125 may include a controller 175 and memory (not shown) configured to maintain the application and to carry out the instructions of the application and facilitate communication with the speakers 105 and/or database 150.

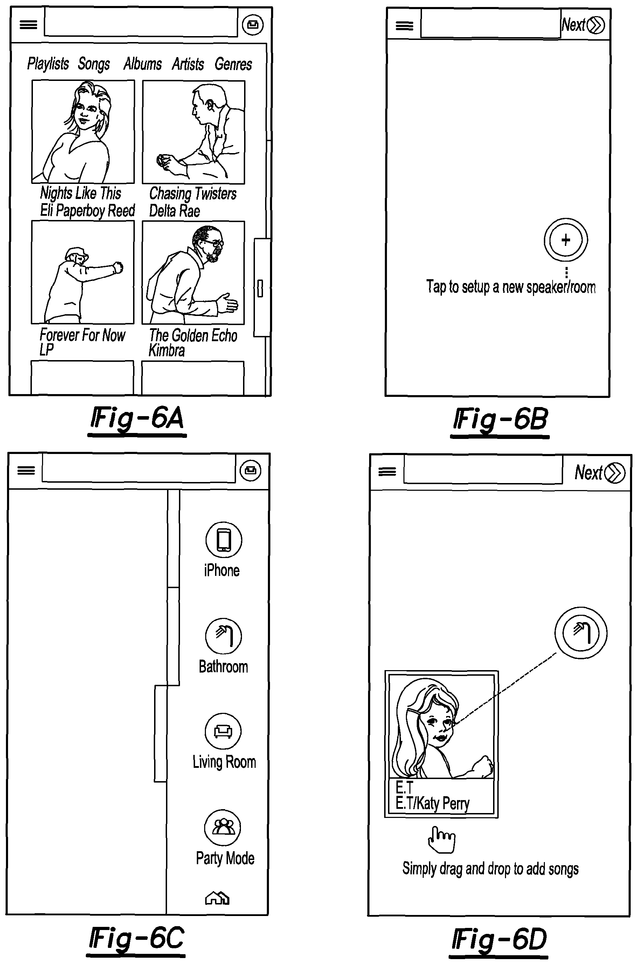

Figure 4 illustrates a flow diagram of the speakers 105 of the speaker system 100. As explained, the speakers 105 may transmit and receive audio between themselves within the wireless network. Audio transmissions may be initiated by the depression of the link button 115 on the speaker 105. Additionally or alternatively, audio transmissions may also be initiated via an application on a mobile device 125, as described in more detail below with respect to Figures 6A-6J.

In one example, a user 155 may be positioned near speaker A, as indicated in figure 4. Speaker A may be playing audio. The user may desire to also have the same audio content being played at speaker A to also be played via speaker C. By depressing the link button 115, speaker A may wirelessly transmit the audio content to speaker C for concurrent playback. Thus, in this example, speaker A, the source speaker, may push or transmit audio to speaker C, the sink speaker.

In another example, the user 155 may be positioned near speaker D. Speaker D may be idle, meaning speaker D is not playing any audio content. Within the wireless network, speaker A and speaker B may be active speakers in that each speaker may be playing audio content, as indicated in Figure 4. The audio content played via the active speakers may be the same, that is, each speaker plays the same song, or the audio content may differ. Upon depressing the link button 115 at speaker D, speaker D may play for a brief time, the content played at one of the active speakers 105 (*e.g*., speaker A). A second press of the link button 115 may play the content played at a second active speaker (*e.g*., speaker B). A third press of the link button 115 may return speaker D to idle. This amount of depressions of the link button 115 is merely used as an example and more or less presses of the link button 115 may be occur depending on the number of speakers 105 in the system.

Additionally or alternatively, a scan feature may be implemented. For example, the audio playing via speaker A may be played for approximately two seconds followed by the audio playing via speaker B being played for approximately the same amount of time, allowing the user to hear a sample of the available audio content. The user at speaker D may then select the one of the two audio contents using the speaker interface 110 (*e.g.,* depressing the link button 115 to select from the audio of the various active speakers). Once the user 155 has selected the audio content, speaker D may receive the audio from the respective speaker. For example, if selected, speaker B will transmit the audio content to speaker D, as indicated in Figure 4.

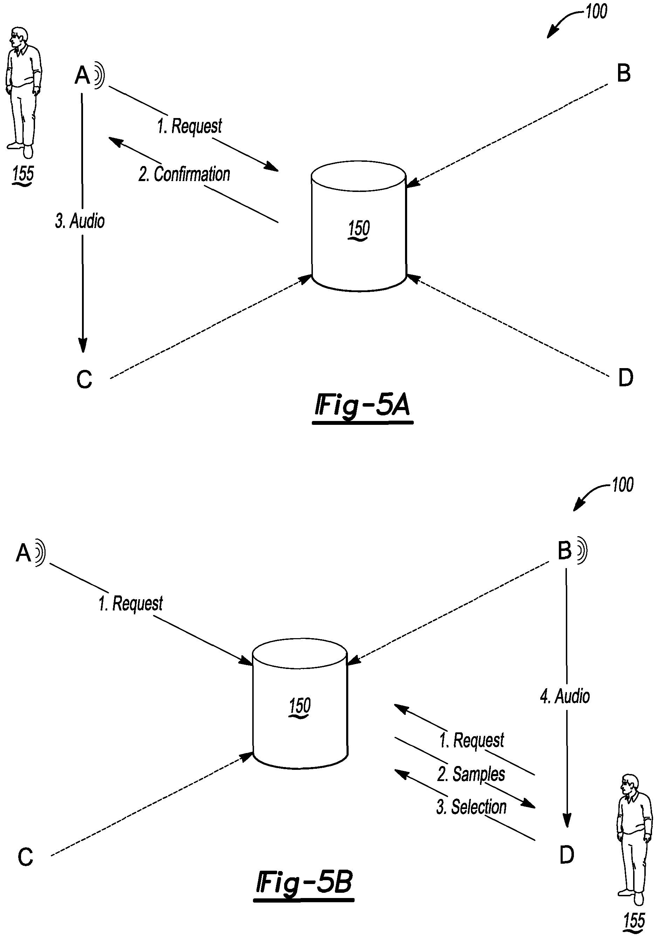

Figures 5A and 5B illustrate additional flow diagrams of the speaker system 100 including the database 150. As explained above, the database 150 may maintain a look-up table for the speakers 105 within the network. The table may include a speaker status, as well as an audio content identifier indicating the content being played on the speaker. Other speaker attributes may also be included in the table, such as equalization parameters, volume settings, speaker names, icons, groupings, user-preferred behavior, etc. The database 150 may be included in one or more of the speakers 105. Furthermore, the database 150 may be located in another device, such as the mobile device 125 (e.g., user's phone, tablet or PC) or another electronic device on the network. The database 150 may also be maintained in cloud storage. Each speaker 105 may communicate with the database 150 to ensure that the look up table is updated in real time or near real time. For example, if the speaker 105 is turned off or on, a change in the speaker's status may be transmitted to the database 150 and the look-up table may be updated accordingly (e.g., status changed from active to idle, or vice-a-versa.)

Referring to Figure 5A, the user 155 may be positioned near speaker A. In this example, speaker A may be an active speaker and the user 155 may wish to transmit the audio content currently played via speaker A to speaker C, similar to the first example as described above in connection with Figure 4. Upon depressing the link button 115, speaker A may transmit a request to the database 150. This request may include a request for an indication that other speakers are recognized as being within the network. Additionally or alternatively, speaker A may transmit the request directly to speaker C (or another speaker). The database 150, upon receiving the request, may use to the look-up table to determine whether any speakers 105 have been identified. For example, speaker B, speaker C and speaker D may be recognized as being within the network, because the table may indicate that speaker B, speaker C and speaker D have been recently used to play audio content. Speakers 105 may not be recognized as being within the network if, for example, the speakers 105 have not recently been used, if the speakers 105 lack wireless connectively with the network as a result of falling outside of the wireless network, or if the speakers 105 lack power (e.g., are unplugged).

The database 150 may respond to speaker A with confirmation that other speakers (e.g., speakers B, C and D) are located within the network. This response may be indicated via the interface 110 by a flash of the LED buttons. The user 155 may then select to send the audio from speaker A to another speaker. In the example shown in Figure 5A, speaker A transmits the audio to speaker C. The user 155 may toggle between the speakers using various buttons on the interface 110 to select which of the speakers 105 to rebroadcast the audio content. In one example, the user 155 may select one speaker, such as speaker C. In another example, the user 155 may select all of the speakers within the network.

While the request, confirmation, and transmission, are shown as separate steps in Figure 5A, each of the steps may be performed without unnecessary input from the user 155. For example, when the user 155 depresses the link button 115, a request may be sent to the database 150 (or speaker C) to verify that other speakers 105 are within the network, but further input from the user 155 may be unnecessary. That is, the user 155 may not be required to interact with the interface 110 further and audio may be automatically rebroadcast to the recognized speakers. Audio may also be transmitted to one of the recognized speakers at a time. In this example, the user 155 may use the interface 110 to toggle through the recognized speakers to selectively transmit audio to one or more speakers 105.

Referring to Figure 5B, the user 155 may be positioned near speaker D. In this example, speaker A and speaker C may be active speakers and the user 155 may wish to rebroadcast audio content currently played via the active speakers to speaker D, similar to the second example described above in Figure 4. Similar to the process of Figure 5A, speaker D may transmit a request to the database 150. Additionally or alternatively, the request may be transmitted directly to the other speakers (speakers A, B and C). This request may include a request for indicating that other speakers are recognized as being within the network. The request may specifically include an indicating of currently active speakers (e.g., speakers currently playing audio). The database 150 may respond to the request by instructing speaker D to scan through the audio being played by the other speakers. This audio content may be transmitted to speaker D by the database, or directly from the active speakers themselves. The user 155 may, after listening to the audio for the predetermined sample time (e.g., approximately two seconds), indicate the user's selection using the interface 110. For example, once the user 155 hears an audio content he or she prefers, the user may depress the link button. This selection may be transmitted to the database, which in turn may transmit a command to the respective speaker 105. The command may instruct the speaker 105 to transmit the selected audio. Additionally or alternatively, speaker D may transmit the command directly to speaker B.

The example shown in Figure 5A may be called a "party mode." In party mode, audio content may be rebroadcasted, or pushed, to any number of the speakers 105 within the network so that as guests of a party move throughout the building or house, the content is continual and uninterrupted. The user 155 may establish preferences for such mode, which may be maintained by the database and may include volume and equalization settings. The preferences may also define rebroadcasting rules. In one example, a rule may include limits as to which speakers 105 may receive rebroadcasts of audio content. For example, if the speaker 105 is located in a room that is not accessible to party guests, such as a child's room, the speaker in the child's room may be excluded from rebroadcasting. As an example, the party mode may be initiated by "long pressing" the link button 115. Such long pressing may include depressing the link button 115 for approximately three seconds.

As explained, the time duration that the link button 115 is depressed may determine the status or mode of the speaker 105. The "long pressing" may include depressing the link button 115 for a predefined time threshold, wherein this threshold may be greater than the threshold discussed above with respect to the "source mode". That is, depressing the link button 115 for a first predefined time threshold may cause the speaker 105 to transmit media content to another speaker, while depressing the link button 115 significantly longer (e.g., a second predefined time threshold) may cause the speaker 105 to initiate the party mode.

In some situations, the user 155 may wish to leave the party mode and enter an "individual mode." That is, instead of listening to the audio content being rebroadcast to the speakers 105 from other speakers, the user 155 may wish to use his or her own content from his or her own device or other local source. That is, while the rest of the venue may be listening to the same audio content, a user within a specific room may wish to listen to different content. The individual mode may be implemented when any particular speaker 105 within the system 100 recognizes another audio input, such as a BLUETOOTH® or auxiliary connection to a mobile device. In this mode, while the speaker 105 may have been receiving audio content via rebroadcasting over Wi-Fi™, the user 155 may switch the content to a local device.

The database 150 may maintain, either in the table or otherwise, which speaker 105 is rebroadcasting and which speakers 105 are playing the rebroadcasted data. Upon a switch in status or mode of the speaker 105, the database 150 may update accordingly. For example, if the speaker 105 switches from playing rebroadcasted audio content to playing audio content from an individual source (e.g., an auxiliary input in the individual mode), the database 150 is updated to indicate this change.

Upon rebroadcasting, the delay between the audio at the source speaker and the sink speaker 105 may be less than approximately 150µs. That is, each of the speakers 105 may stream the same audio at nearly the exact same time, without users hearing a delay between the content. Thus, a seamless listening experience may be achieved when the user 155 moves from zone to zone.

In addition to rebroadcasting features, the speaker 105 may also include a microphone to be used for user interaction. In one example, the microphone may use voice recognition to receive commands from the user 155. In another example, the microphone may be used to issue commands to the mobile device 125. In this example, the microphone on the speaker 105 may receive an audible command and transmit the command to the mobile device 125. The mobile device 125 may, in turn, implement a search based on the command. As a non-limiting example, the mobile device 125 may use Google Voice Search™ to perform a search based on the audio command received at the microphone.

Figures 6A-6J illustrate screen shots for an application 130 of the speaker system 100. Screen shots and interfaces described herein may be displayed via the device display 135. The screen shots are to serve as examples to illustrate various features of an application that is executed to operate on the mobile device 125 and communicate with the speakers 105 of the system 100. The application may maintain certain media content from various sources (*e.g*., local media content on the device, streaming audio content from subscriptions such as Pandora and Spotify, etc.). The application may also control, with execution on the controller within the mobile device 125, the rebroadcast to the various speakers 105. Instead of or in addition to using the interface 110 on the speakers 105 to control the pushing and pulling of audio between the speakers 105, the application may facilitate such control features via a device display 135.

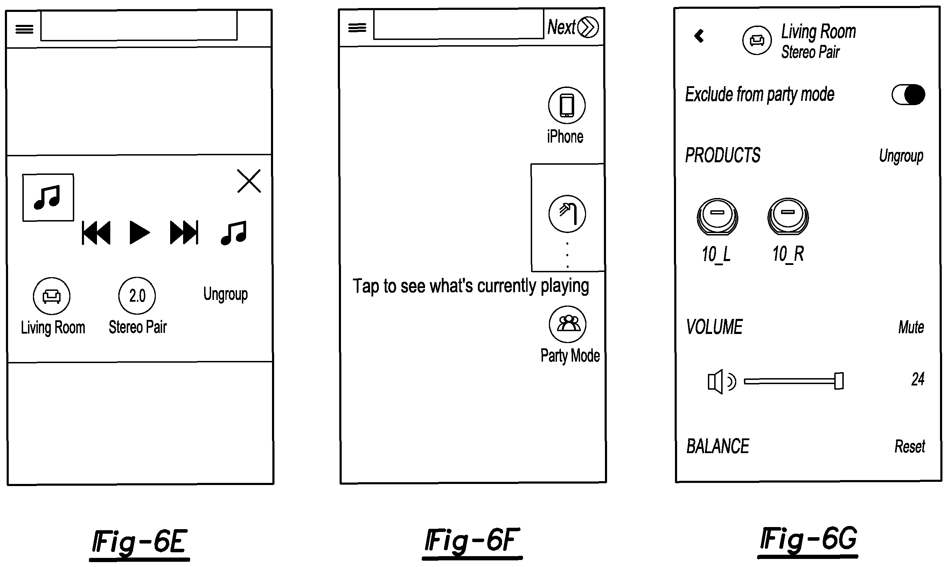

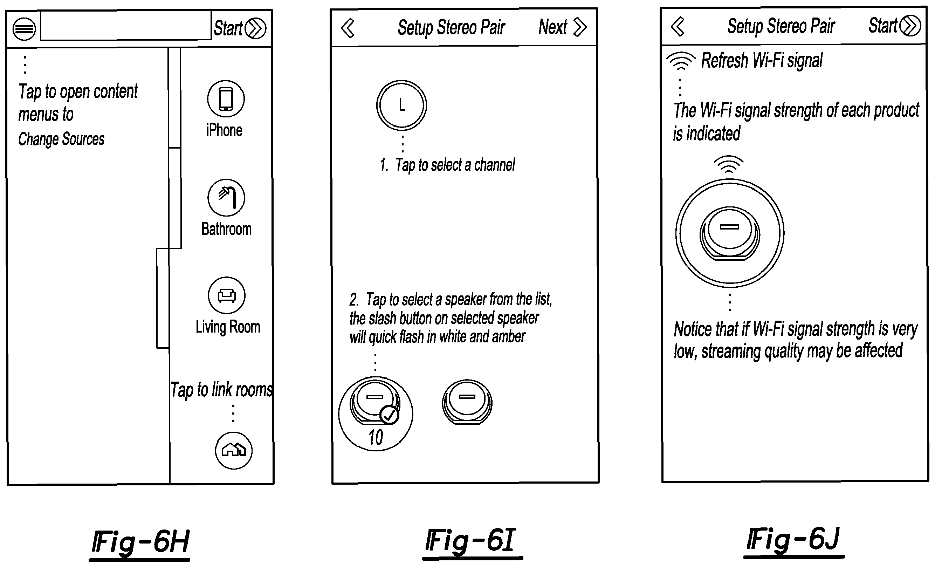

The application may include an introduction screen in response to the user 155 opening the application for the first time. This introduction screen may include tool tips and other instructions to increase user awareness and understanding of the application. The application may also be programmed to initiate a setup wizard, as shown by way of example in Figure 6B. The setup wizard may be initiated when a new device within the network is first discovered or recognized. For example, upon startup, the application may receive communication from all speakers 105 within the system 100. If a new speaker 105 is identified, then the application may initiate the setup wizard. The setup wizard may be programmed to connect the new speaker 105 to the home wireless network and provide service set identifier (SSID) and check for software updates for the speaker 105. The setup wizard may also be programmed to ask the user if speaker 105 will be part of a stereo pair or a 5.1 system. An example of this interface is shown in Figure 6I. The setup wizard may also be programmed to ask whether the speaker 105 will be excluded from the party mode. An example of this interface is shown in Figure 6G. Also shown in Figure 6G is a list of products currently located within the room (e.g., within the living room). The list of products, as shown, may be identified by an icon and a name identifier such as the "10_L" and "10_R," and may be shown as grouped as part of a stereo pair. An option button may be shown to group or ungroup the products. Additionally a volume button may be included for the room. Although not necessary, it may be likely that if one speaker is excluded from party mode, then all speakers within that room are also excluded.

Figure 6A shows a library interface where the user 155 may navigate through the available audio content. In one example, content may be provided via icons, as shown, as well as via lists, clusters, thumbnails, etc. Further, the application may be programmed to provide a dynamic source list where each bullet in the list indicates a separate source of audio such as a local library, a network drive (digital living network alliance (DLNA) digital media server (DMS) devices), BLUETOOTH™ or auxiliary connections, streaming services, broadcast data systems (BDS), Internet Radio, etc. Figure 6H shows a 'sources' icon which may expand to show the dynamic source list upon being selected by the user 155. Figure 6H also shows the ability to link rooms to each other so that audio played in one room may also be the same audio played in another linked room. Non-limiting examples of linking rooms as used in this disclosure are provided above with respect to at least paragraphs 20-29 and Figures 4-5. Figure 6C shows a list of icons relating to various devices, locations and modes of the system 100. It is recognized that the number and type of locations shown in Figure 6C are non-limiting and provided for illustration purposes only. The user 155 may instruct speakers 105 within a certain room to play a certain song by dragging the song to the room icon, as shown in Figure 6D. Each room could be instructed to play a different song in response to the setup via the application.

Figure 6E may be presented in response to the user 155 selecting one of the icons in Figure 6C. Figure 6E may display various attributes relating to the speakers 105 of the selected room. For example, the song or album that is playing via the selected speaker 105 may be shown via an icon. Further, the speaker mode may also be displayed (*e.g*., stereo pair.) The speaker settings may be adjusted at this screen, including changing the speaker mode by grouping or ungrouping the speaker 105.

Figure 6F shows a screen for determining the audio content currently being broadcast in a selected room.

Further, as shown in Figure 6I, different speakers 105 within the system 100 may be shown by a speaker icon relating to the type or model of that specific speaker 105. Upon detection of a new speaker 105, the database 150 may maintain the speaker type/model and the application may be programmed to display the appropriate icon. The application may also be programmed to show the strength of a wireless network, as shown in Figure 6J.

The application may synchronize with the interfaces 110 of each speaker 105. That is, the screen display may correlate to the LED status of the speaker 105. For example, if speaker D is currently playing audio received via an auxiliary input, and the application instructs speaker D to switch to party mode and play the same content as speaker A, the LEDs of speaker D may indicate that the speaker 105 is entering party mode (e.g., quick flash of white LEDs). The screen of the application may also mimic the behavior of the LEDs at speaker D and provide for a corresponding indicator (e.g., some form of white flash) at the mobile device 125.

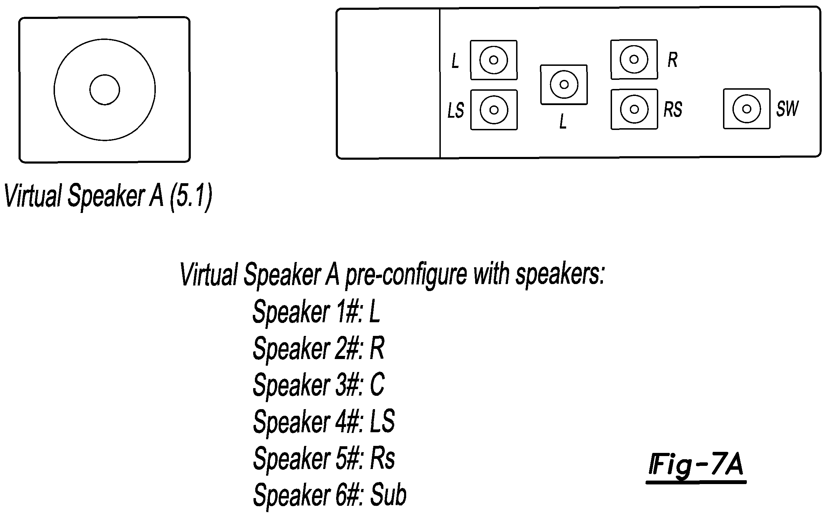

Figures 7A-7D illustrate various diagrams for a multi-channel configuration (e.g., 2.x or 5.x) of the speaker system 100. The multi-channel configuration may sync behavior among the speakers 105. For example, the speakers 105 may maintain the same volume level and may be adjusted concurrently when the volume is adjusted at one of the speakers 105. A single BLUETOOTH® and/or auxiliary input may be used for the multi-channel configuration. For a 5.1 channel system, the center speaker "C" may be the default input and for a 2.0 system, the left speaker "L" may be the default input. The defaults may be adjusted using the application interface on display 135. The defaults, among other settings, may be maintained by the database 150.

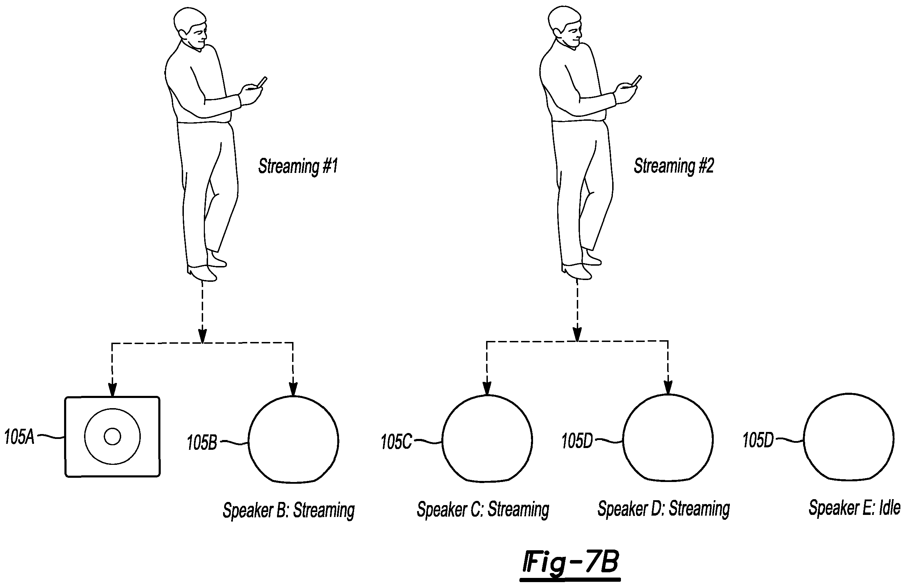

If the speaker 105 is to be set as the "master" speaker, as shown in Figure 7B as speaker 105A, then the master speaker 105A may be used to control all other "slave" speakers, as shown in Figure 7B as speakers 105B-105D. For example, speaker A may be the master speaker and speakers B, C and D may be the slave speakers 105B, 105C, 105D, respectively. The interface 110 at speaker A may control speaker A, as well as speakers B, C and D (*e.g.*, speaker A may control the volume of the other speakers 105). Further, the interfaces 110 at speakers B, C and D may be inactive in that they may not be used to control the speakers 105. In another example, all buttons except the link button 115 may be inactive. Additionally or alternatively, the LEDs at the master speaker may illuminate, while the LEDs at the slave speakers 105 may not. Additionally or alternatively, the LEDs at the master speaker may illuminate with a first color (e.g., green) while the LEDs at the slave speakers may illuminate with a second color (e.g., yellow).

In addition to disabling the interfaces 110 at the slave speakers 105, other communications may be disabled upon entering into a master and slave arrangement. For example, all other radios at the slave speakers 105 may be turned off. This may prevent the slave speakers 105 from receiving audio data other than the audio data in compliance with the multi-channel system.

Figure 7A shows the pre-configuration of six speakers for a 5.1 channel system, although more or less speakers may be used. Figure 7B shows a system diagram when the source of a 5.1 system is changed. In the example shown, the virtual speaker 105A may initially provide the content. Upon short pressing the link button 115 at speaker 105B, speaker 105B may request to receive broadcasted content (e.g., act as a sink).

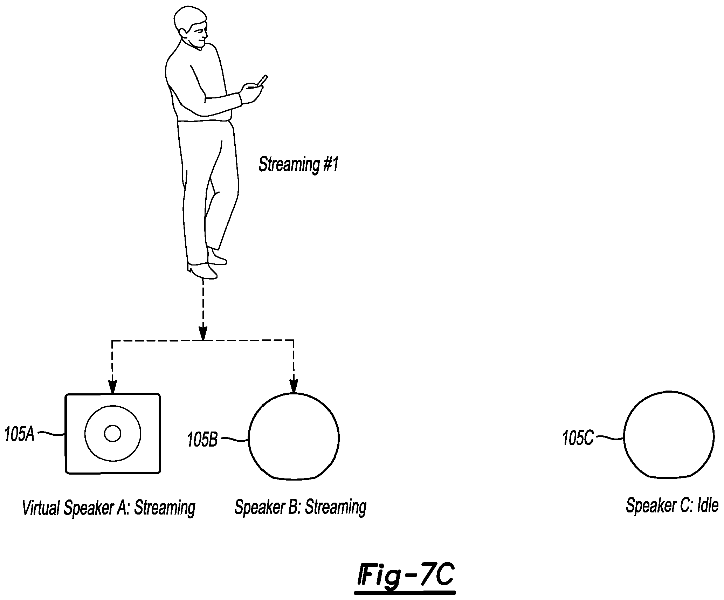

Figure 7C shows a 5.1 system in party mode. In this example, upon long pressing the link button 115 at any of the speakers within the system, virtual speaker 105A may rebroadcast content to each of the other speakers within the system.

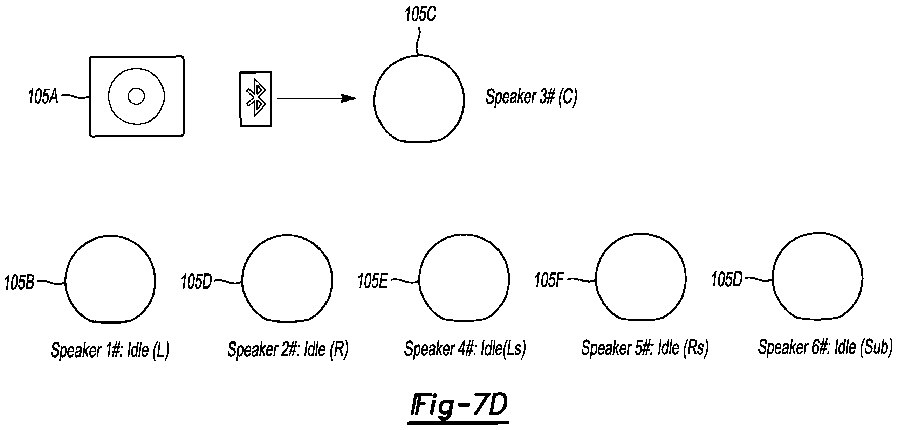

Figure 7D shows a 5.1 system when local playback is used. In this example, similar to the one described in Figure 7A, the system of speakers may act as a single stereo speaker such that the system of speakers may include speakers acting as C, L, R, Ls, Rs, and Sub speakers. Although six speakers and a virtual speaker are shown in Figure 7D, more or less speakers may be used within the system of speakers and accommodations may be made for other multi-channel speaker configurations.

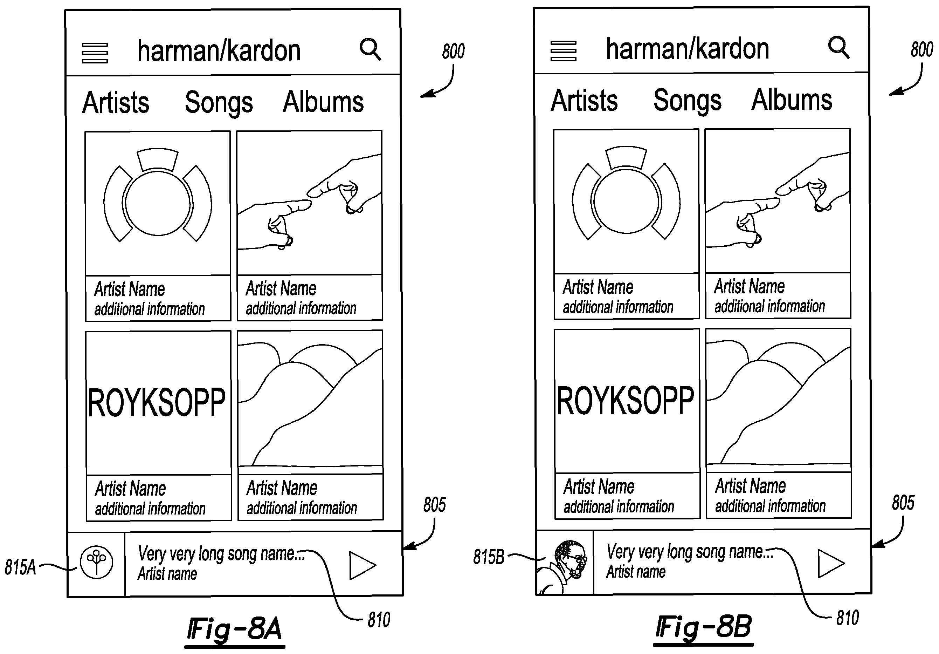

Figures 8A and 8B illustrate example library interfaces 800 where the user 155 may navigate through the available audio content. In one example, content may be provided via icons, as shown, as well as via lists, clusters, thumbnails, etc. An information bar 805 may be arranged on the library interface. In the examples in Figures 8A and 8B, the information bar 805 is arranged at the bottom of the interface 800. The information bar 805 may include at least one media content title 810 and at least one icon 815. The icon 815 may include a room icon 815A as shown in Figures 8A, indicative of the room that the content is playing in. The icon 815 may also include a thumbnail icon 815B of the currently played content.

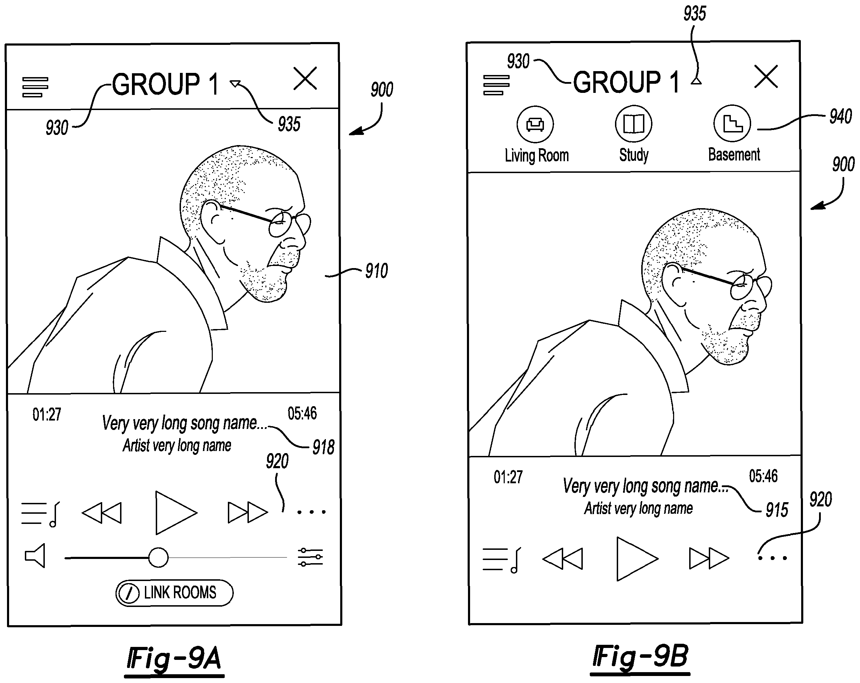

Figures 9A and 9B illustrate example player interfaces 900 which may include a thumbnail image 910 of the currently played content and an associated media content title 915. The interface 900 may also include a control panel 920 for playing, pausing, fast forwarding, rewinding, etc. The interface 900 may include a group title 930 and an arrow 935 configured to provide a drop down menu indicating a list of current rooms 940 and associated icons, as shown in Figure 9B. The list of current rooms 940 may indicate which rooms are within the current group. In this example, the living room, study and basement are included in "Group 1".

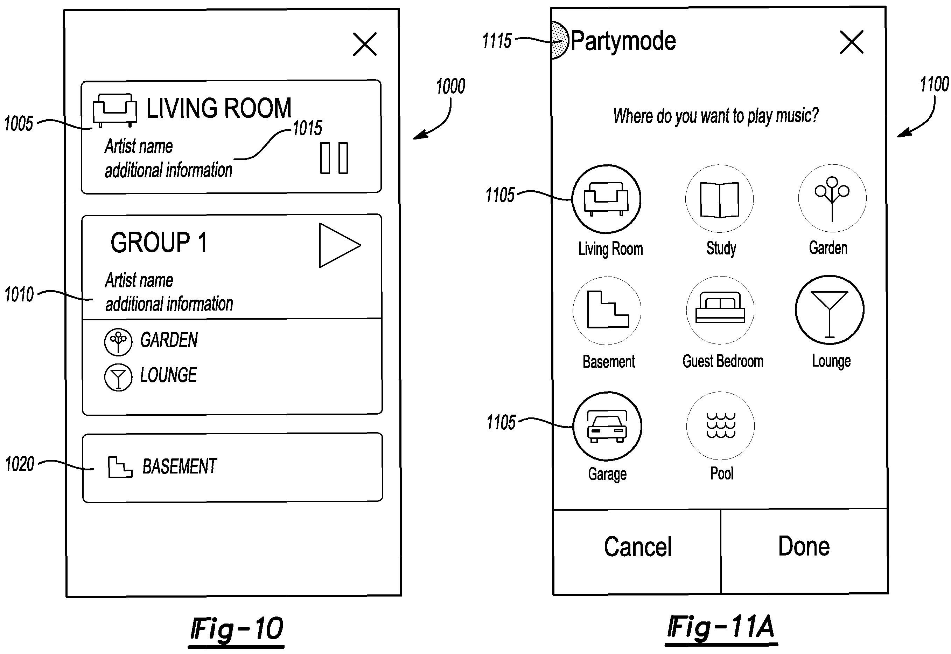

Figure 10 illustrates an example room or location overview interface 1000. The interface 1000 may include an active room pane 1005 indicating the room that the device 1250 is currently present in as well as the current media content title. The active room pane 1005 may include animations 1015 or icons indicative of the status of the media content. The interface 1000 may also include a group pane 1010 indicating the group name, and a listing of the current rooms within the associated group. The listing of rooms may include a list of currently active rooms. That is, the rooms where media is currently being broadcast to. An in-active room list 1020 may be included in the interface. This in-active room list 1020 may include rooms that while included in the group, may include a non-functioning speaker. For example, the speaker 105 within the listed room may have been disconnected from the wireless network and therefore may not be receiving the content.

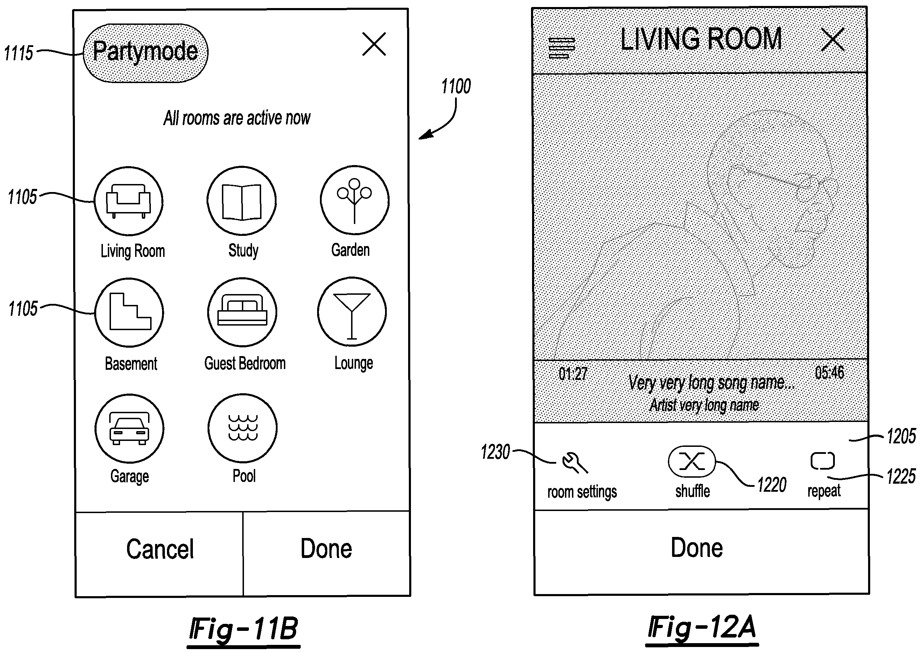

Figures 11A and 11B illustrate example party mode interfaces 1100A and 1100B, respectively. The party mode interface 1100A may permit a user to select which of the available rooms are to be included in a party mode. That is, the user may select which of the available rooms will play the media content when the application is in the party mode. Figure 11A illustrates a set up configuration of the party mode interface 1100A (i.e., a party mode screen). In this example, various room icons 1105 may be displayed with a room icon and associated text describing the room. Upon selection, the icons 1105 may become illuminated, for example, the living room icon, lounge icon and garage icons, as shown in Figure 11A. The interface 1100 may include a dynamically updated capacity bar 1115. The capacity bar 1115 may increase in size as the rooms are selected, showing progress in the selections thereof. For example, Figure 11B shows a filled capacity bar once all of the rooms have been selected. Figure 11B illustrates an example party mode interface 1100B where all rooms have been selected and are now active (i.e., a party mode complete screen). In this example screen, the names of the rooms have been removed and only the icons 1105 appear.

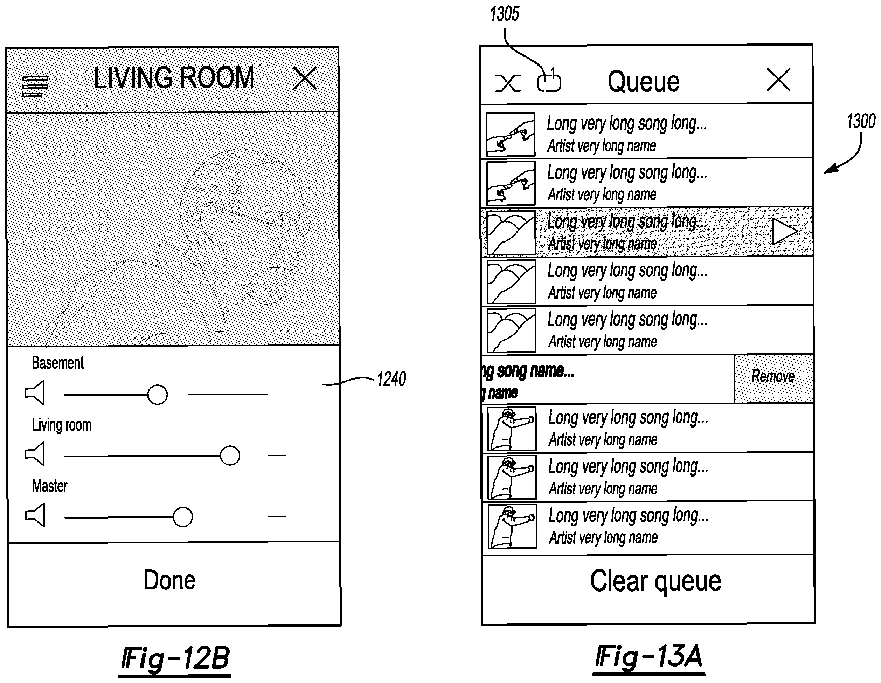

Figures 12A and 12B illustrate overlays on the example player interfaces 905, as shown in Figures 9A and 9B. Figure 12A illustrates a playback option overlay 1205 which may present various options for playing the media content such as a shuffle option 1220 and a repeat option 1225. The overlay 1205 may also include a room setting option 1230. Overlay 1240, as shown in Figure 12B, may be displayed in response to a selection of the room settings option 1230. Overlay 1240 may include a volume bar for a plurality of rooms. By adjusting the volume bar, the volume in the respective room may also be adjusted.

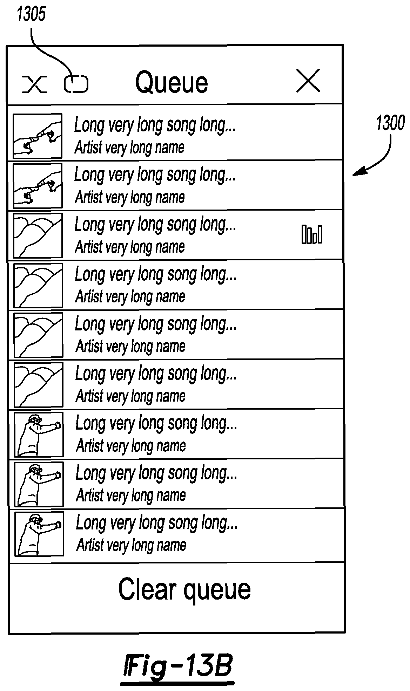

Figures 13A and 13B illustrate example playlist interfaces 1300 which may include a listing of content in respective order to be played. The interface 1300 may include a repeat mode icon 1305 which may indicate the number of times that the playlist is to be repeated. For example, Figure 13A shows a repeat icon 1305 indicating the playlist is to be repeated once. Figure 13B shows a repeat icon 1305 indicating that the playlist is to be repeated continuously.

While described herein is a speaker system 100, it may be understood that the methods and systems described herein may extend to other systems such as video systems. In this example, video capable devices may transmit and receive media content including audio and visual content. When referring herein to the specific speakers and audio, it should be understood that the speakers may be replaced with a video capable device, and that media content may be rebroadcast to and from the video capable devices.

Computing devices described herein generally include computer-executable instructions, where the instructions may be executable by one or more computing devices such as those listed above. Computer-executable instructions may be compiled or interpreted from computer programs created using a variety of programming languages and/or technologies, including, without limitation, and either alone or in combination, Java™, C, C++, Visual Basic, Java Script, Perl, etc. In general, a processor (*e.g*., a microprocessor) receives instructions, *e.g*., from a memory, a computer-readable medium, etc., and executes these instructions, thereby performing one or more processes, including one or more of the processes described herein. Such instructions and other data may be stored and transmitted using a variety of computer-readable media.

With regard to the processes, systems, methods, heuristics, etc., described herein, it should be understood that, although the steps of such processes, etc., have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

While exemplary embodiments are described above, it is not intended that these embodiments describe all possible forms of the invention. Rather, the words used in the specification are words of description rather than limitation.

## Claims

1. A first audio playback device comprising:
a speaker (105) configured to play media content;
at least one interface (110) including a switch;
a transceiver (170) configured to transmit the media content to a second audio playback device and receive the media content from the second audio playback device; and
a controller configured to receive a signal indicative of a user input that is received at the switch for a time duration and to one of transmit the media content to the second audio playback device via the transceiver (170) for playback of the media content at the second audio playback device and to receive the media content from the second audio playback device via the transceiver (170) based on the time duration, and to transmit the media content to the second audio playback device in the event the time duration is equal to a first time threshold, **characterized in that** the controller is further configured to receive the media content from the second audio playback device in the event the time duration is equal to a second time threshold, wherein the first time threshold is different from the second time threshold.

2. The first audio playback device of claim 1 wherein the second time threshold is greater than the first time threshold.

3. The first audio playback device of claim 1 wherein the controller is further configured to transmit the media content to the second audio playback device via the transceiver (170) for concurrent playback of the media content at each of the first audio playback device and the second audio playback device based on the time duration.

4. The first audio playback device of claim 1 wherein the controller is further configured to receive the media content from the second audio playback device via the transceiver (170) for concurrent playback of the media content at each of the first audio playback device and the second audio playback device based on the time duration.

5. The first audio playback device of claim 1 further comprising a status indicator to indicate at least one of an active status, an idle status, and a party status, wherein the party status is indicative of transmission of the media content to a plurality of playback devices via the transceiver (170) for playback of the media content at each of the plurality of playback devices.

6. A media content playback system, comprising:
a first playback device and a second playback device as claimed in any of claims 1 to 5, each playback device having at least one pushbutton and each configured to transmit or receive media content via a wireless transceiver (170), wherein upon depression of the pushbutton at the first playback device, media content is transmitted therefrom to the second playback device.

7. The system of claim 6 wherein upon depression of the pushbutton at the second playback device, media content is received at the second playback device from the first playback device.

8. The system of claim 7 wherein media content is transmitted to the second playback device in response to a time duration of the depression of the pushbutton exceeding a predefined time threshold.

9. The system of claim 6 wherein the second playback device is configured to transmit media content to the first playback device in response to a time duration of the depression of the pushbutton at the second playback device exceeding a first predefined time threshold.

10. The system of claim 9 further comprising a third media playback device configured to receive media content from the first playback device concurrently with the second playback device receiving media content from the first playback device in response to a time duration of the depression of the pushbutton at one of the playback devices exceeding a second predefined time threshold, the second predefined time threshold being greater than the first predefined time threshold.

11. The system of claim 6 wherein each of the media playback devices includes a status indicator configured to indicate a status of the respective speaker.

12. The system of claim 11 wherein the status indicator may indicate at least one of an active, idle and party status, wherein the party status is indicative of transmission of the media content to a plurality of audio playback devices for playback of the media content at each of the plurality of audio playback devices.

## Patentansprüche

1. Erstes Tonwiedergabegerät, umfassend:
einen Lautsprecher (105), der dazu konfiguriert ist, Medieninhalt wiederzugeben;
zumindest eine Schnittstelle (110), die einen Schalter umfasst;
einen Sender-Empfänger (170), der dazu konfiguriert ist, den Medieninhalt an ein zweites Tonwiedergabegerät zu senden und den Medieninhalt von dem zweiten Tonwiedergabegerät zu empfangen; und
eine Steuerung, die dazu konfiguriert ist, ein Signal zu empfangen, das eine Nutzereingabe angibt, die eine Zeitdauer lang am Schalter empfangen wird, und entweder den Medieninhalt über den Sender-Empfänger (170) an das zweite Tonwiedergabegerät zur Wiedergabe des Medieninhalts beim zweiten Tonwiedergabegerät zu senden oder, aufgrund der Zeitdauer, den Medieninhalt über den Sender-Empfänger (170) vom zweiten Tonwiedergabegerät zu empfangen, und den Medieninhalt an das zweite Tonwiedergabegerät zu senden, falls die Zeitdauer einem ersten Zeitschwellenwert entspricht, **dadurch gekennzeichnet, dass** die Steuerung ferner dazu konfiguriert ist, den Medieninhalt von dem zweiten Tonwiedergabegerät zu empfangen, falls die Zeitdauer einem zweiten Zeitschwellenwert entspricht, wobei der erste Zeitschwellenwert sich von dem zweiten Zeitschwellenwert unterscheidet.

2. Erstes Tonwiedergabegerät gemäß Anspruch 1, wobei der zweite Zeitschwellenwert größer ist als der erste Zeitschwellenwert.

3. Erstes Tonwiedergabegerät gemäß Anspruch 1, wobei die Steuerung ferner dazu konfiguriert ist, den Medieninhalt über den Sender-Empfänger (170) aufgrund der Zeitdauer an das zweite Tonwiedergabegerät zu senden, zur gleichzeitigen Wiedergabe des Medieninhalts jeweils beim ersten Tonwiedergabegerät und beim zweiten Tonwiedergabegerät.

4. Erstes Tonwiedergabegerät gemäß Anspruch 1, wobei die Steuerung ferner dazu konfiguriert ist, den Medieninhalt über den Sender-Empfänger (170) aufgrund der Zeitdauer vom zweitem Tonwiedergabegerät zu empfangen, zur gleichzeitigen Wiedergabe des Medieninhalts jeweils beim ersten Tonwiedergabegerät und beim zweiten Tonwiedergabegerät.

5. Erstes Tonwiedergabegerät gemäß Anspruch 1, ferner umfassend eine Zustandsanzeige, um zumindest einen von einem aktiven Zustand, einem Ruhezustand oder einem Gemeinschaftszustand anzuzeigen, wobei der Gemeinschaftszustand angibt, dass der Medieninhalt über den Sender-Empfänger (170) an eine Mehrzahl von Wiedergabegeräten gesendet wird, zur Wiedergabe des Medieninhalts bei jedem der Mehrzahl von Wiedergabegeräten.

6. Medieninhaltswiedergabesystem, umfassend:
eine erstes Wiedergabegerät und ein zweites Wiedergabegerät gemäß einem der Ansprüche 1 bis 5, wobei jedes Wiedergabegerät mindestens einen Druckknopf aufweist und jeweils dazu konfiguriert ist, Medieninhalt über einen drahtlosen Sender-Empfänger (170) zu senden oder zu empfangen, wobei Medieninhalt vom ersten Wiedergabegerät zum zweiten Wiedergabegerät gesendet wird, wenn der Druckknopf am ersten Wiedergabegerät gedrückt wird.

7. System gemäß Anspruch 6, wobei Medieninhalt am zweiten Wiedergabegerät vom ersten Wiedergabegerat empfangen wird, wenn der Druckknopf am zweiten Wiedergabegerät gedrückt wird.

8. System gemäß Anspruch 7, wobei Medieninhalt als Reaktion auf eine Zeitdauer des Drückens des Druckknopfes, die einen vorbestimmten Zeitschwellenwert überschreitet, an das zweite Wiedergabegerät gesendet wird.

9. System gemäß Anspruch 6, wobei das zweite Wiedergabegerät dazu konfiguriert ist, Medieninhalt als Reaktion auf eine Zeitdauer des Drückens des Druckknopfes am zweiten Wiedergabegerät, die einen ersten vorbestimmten Zeitschwellenwert überschreitet, an das erste Wiedergabegerät zu senden.

10. System gemäß Anspruch 9, ferner umfassend ein drittes Medienwiedergabegerät, das dazu konfiguriert ist, Medieninhalt vom ersten Wiedergabegerät zu empfangen, zur gleichen Zeit wenn das zweite Wiedergabegerät Medieninhalt als Reaktion auf eine Zeitdauer des Drückens des Druckknopfes an einem der Wiedergabegeräte empfängt, die einen zweiten vorbestimmten Zeitschwellenwert überschreitet, wobei der zweite vorbestimmte Zeitschwellenwert größer ist als der erste vorbestimmte Zeitschwellenwert.

11. System gemäß Anspruch 6, wobei jedes der Medienwiedergabegeräte eine Zustandsanzeige umfasst, die dazu konfiguriert ist, den Zustand des entsprechenden Lautsprechers anzuzeigen.

12. System gemäß Anspruch 11, wobei die Zustandsanzeige mindesten jeweils einen aktiven Zustand, einen Ruhezustand oder einen Gemeinschaftszustand anzeigt, wobei der Gemeinschaftszustand anzeigt, dass der Medieninhalt an eine Mehrzahl von Tonwiedergabegeräten gesendet wird, zur Wiedergabe des Medieninhalts bei jedem der Mehrzahl von Tonwiedergabegeräten.

## Revendications

1. Premier dispositif de lecture audio comprenant :
un haut-parleur (105) configuré pour lire du contenu multimédia ;
au moins une interface (110) comportant un commutateur ;
un émetteur-récepteur (170) configuré pour transmettre le contenu multimédia à un deuxième dispositif de lecture audio et
recevoir le contenu multimédia du deuxième dispositif de lecture audio ; et
un dispositif de commande configuré pour recevoir un signal indiquant une entrée d'utilisateur qui est reçu au niveau du commutateur pendant une durée et soit pour transmettre le contenu multimédia au deuxième dispositif de lecture audio par l'intermédiaire de l'émetteur-récepteur (170) pour la lecture du contenu multimédia sur le deuxième dispositif de lecture audio et recevoir le contenu multimédia du deuxième dispositif de lecture audio par l'intermédiaire de l'émetteur-récepteur (170) sur la base de la durée, soit pour transmettre le contenu multimédia au deuxième dispositif de lecture audio dans le cas où la durée est égale à un premier seuil de temps, **caractérisé en ce que** le dispositif de commande est en outre configuré pour recevoir le contenu multimédia du deuxième dispositif de lecture audio dans le cas où la durée est égale à un second seuil de temps, dans lequel le premier seuil de temps est différent du second seuil de temps.

2. Premier dispositif de lecture audio selon la revendication 1, dans lequel le second seuil de temps est supérieur au premier seuil de temps.

3. Premier dispositif de lecture audio selon la revendication 1, dans lequel le dispositif de commande est en outre configuré pour transmettre le contenu multimédia au deuxième dispositif de lecture audio par l'intermédiaire de l'émetteur-récepteur (170) pour la lecture simultanée du contenu multimédia sur chacun du premier dispositif de lecture audio et du deuxième dispositif de lecture audio sur la base de la durée.

4. Premier dispositif de lecture audio selon la revendication 1, dans lequel le dispositif de commande est en outre configuré pour recevoir le contenu multimédia du deuxième dispositif de lecture audio par l'intermédiaire de l'émetteur-récepteur (170) pour la lecture simultanée du contenu multimédia sur chacun du premier dispositif de lecture audio et du deuxième dispositif de lecture audio sur la base de la durée.

5. Premier dispositif de lecture audio selon la revendication 1, comprenant en outre un indicateur d'état pour indiquer au moins l'un parmi un état actif, un état inactif et un état de partie, dans lequel l'état de partie indique la transmission du contenu multimédia à une pluralité de dispositifs de lecture par l'intermédiaire de l'émetteur-récepteur (170) pour la lecture du contenu multimédia sur chacun de la pluralité de dispositifs de lecture.

6. Système de lecture de contenu multimédia, comprenant :
un premier dispositif de lecture et un deuxième dispositif de lecture selon l'une quelconque des revendications 1 à 5, chaque dispositif de lecture ayant au moins un bouton-poussoir et
chacun étant configuré pour transmettre ou recevoir du contenu multimédia par l'intermédiaire d'un émetteur-récepteur sans fil (170), dans lequel lors de l'enfoncement du bouton-poussoir sur le premier dispositif de lecture, le contenu multimédia est transmis au deuxième dispositif de lecture à partir de celui-ci.

7. Système selon la revendication 6, dans lequel lors de l'enfoncement du bouton-poussoir sur le deuxième dispositif de lecture, le contenu multimédia est reçu sur le deuxième dispositif de lecture depuis le premier dispositif de lecture.

8. Système selon la revendication 7, dans lequel le contenu multimédia est transmis au deuxième dispositif de lecture en réponse à une durée de l'enfoncement du bouton-poussoir dépassant un seuil de temps prédéfini.

9. Système selon la revendication 6, dans lequel le deuxième dispositif de lecture est configuré pour transmettre un contenu multimédia au premier dispositif de lecture en réponse à une durée de l'enfoncement du bouton-poussoir sur le deuxième dispositif de lecture dépassant un premier seuil de temps prédéfini.

10. Système selon la revendication 9, comprenant en outre un troisième dispositif de lecture multimédia configuré pour recevoir du contenu multimédia du premier dispositif de lecture simultanément au deuxième dispositif de lecture recevant du contenu multimédia du premier dispositif de lecture en réponse à une durée de l'enfoncement du bouton-poussoir sur l'un des dispositifs de lecture dépassant un second seuil de temps prédéfini, le second seuil de temps prédéfini étant supérieur au premier seuil de temps prédéfini.

11. Système selon la revendication 6, dans lequel chacun des dispositifs de lecture multimédia comporte un indicateur d'état configuré pour indiquer un état du haut-parleur respectif.

12. Système selon la revendication 11, dans lequel l'indicateur d'état peut indiquer au moins l'un parmi un état actif, un état inactif et un état de partie, dans lequel l'état de partie indique la transmission du contenu multimédia à une pluralité de dispositifs de lecture audio pour la lecture du contenu multimédia sur chacun de la pluralité de dispositifs de lecture audio.
